# EUROPEAN PATENT SPECIFICATION

(11) **EP 2 675 540 B1**
(45) Date of publication and mention of the grant of the patent: **21.03.2018**
(21) Application number: 11844773.9
(22) Date of filing: 02.12.2011
(51) Int. Cl.: B01D 15/18, G01N 30/44, G01N 30/46, B01D 15/24, G01N 30/42, G01N 30/88, B01D 15/38

(54) **SYSTEM AND PROCESS FOR BIOPOLYMER CHROMATOGRAPHY**
SYSTEM UND VERFAHREN FÜR BIOPOLYMER-CHROMATOGRAPHIE
SYSTÈME ET PROCÉDÉ DE CHROMATOGRAPHIE D'UN BIOPOLYMÈRE

(30) Priority: 03.12.2010 SE 1051279
(43) Date of publication of application: 25.12.2013
(73) Proprietor: GE Healthcare Bio-Sciences AB, 75184 Uppsala (SE)
(72) Inventor: HALL, Martin, S-751 84 Uppsala (SE); LACKI, Karol, S-751 84 Uppsala (SE)
(74) Representative: Larsson, Jan Anders
(86) International application number: PCT/SE2011/051468
(87) International publication number: WO 2012/074481

(56) References cited:
- WO-A2-2008/064242
- US-A1- 2006 273 013
- US-A1- 2007 131 615
- US-A1- 2009 149 638
- US-A1- 2010 176 058
- BISSCHOPS M. ET AL.: 'Single-Use, Continuous-Countercurrent, Multicolumn Chromatography' BIOPROCESS INTERNATIONAL, [Online] vol. 7, no. S6, June 2009, pages 18 - 23, XP002686222 Retrieved from the Internet: <URL:http://www.bioprocessintl.com/multimed ia/archive/00079/BPI_A_090706SUPAR04_79085a .pdf> [retrieved on 2011-05-17]

## Description

### Technical field of the invention

The present invention relates to chromatographic separations and in particular to large-scale chromatographic separation of biopolymers such as monoclonal antibodies. More specifically it relates to a chromatography system with hold tanks and to a continuous or semi-continuous method of operating such a system.

### Background of the invention

In the biopharmaceutical field, recent advancements in genetic engineering and cell culture technology have driven expression levels higher than ever, putting a considerable burden on down-stream purification, especially the capture step. While the introduction of new chromatography resins significantly improves the efficiency of a process based on a conventional fixed bed chromatography, additional gains can be achieved by operating in a continuous manner. The latter is especially appealing when continuous bioreactors, such as those operated in perfusion mode, are employed.

A typical process for downstream processing of monoclonal antibodies involves a capture step using a resin with protein A ligands to bind the antibodies with very high selectivity. This is a highly efficient step in that the majority of the impurities are removed here. However, due to the cost of the protein A resin, there is a strong incentive to optimize the efficiency, e.g. by chemical engineering methods that increase the utilization of the resin's binding capacity. After the protein A step, the antibodies are further purified in other chromatography steps, e.g. bind-elute cation exchange chromatography and/or in bind-elute or flow-through multimodal or anion exchange chromatography. Also in these steps there is a need to increase the capacity utilization of the resins used, particularly when the steps are run in bind-elute mode.

In continuous chromatography, several identical columns are connected in an arrangement that allows columns to be operated in series and/or in parallel, depending on the method requirements. Thus, all columns can be run in principle simultaneously, but slightly shifted in method steps. The procedure can be repeated, so that each column is loaded, eluted, and regenerated several times in the process. Compared to 'conventional' chromatography, wherein a single chromatography cycle is based on several consecutive steps, such as loading, wash, elution and regeneration, in continuous chromatography based on multiple identical columns all these steps occur simultaneously but on different columns each. Continuous chromatography operation results in a better utilization of chromatography resin, reduced processing time and reduced buffer requirements, all of which benefits process economy. Continuous chromatography is sometimes denoted simulated moving bed (SMB) chromatography.

Bishop et al ("Simulated Moving Bed technology in Biopharmaceutical Processing", Bischops, M. and Pennings, M., Recovery Biological Products XI, (2003) Banff, Alberta, Canada) discloses a continuous chromatography method based on simulated moving bed (SMB) technology, which has been successfully employed for the laboratory scale purification of IgG with a protein A affinity resin. Despite the fact that the multi-column and multi-zone continuous approach provided by SMB greatly increases process efficiency, SMB systems have not been utilized to date for cGMP biopharmaceutical production, mainly because of system complexity from both hardware and operational perspectives.

Heeter et al (Heeter, G.A. and Liapis, A.I., J. Chrom A, 711 (1995)) has suggested, as an alternative to a typical four zone SMB system, a method based on a three column periodic counter-current chromatography (3C-PCC) principle. More recently, Lacki et al ("Protein A Counter-Current Chromatography for Continuous Antibody Purification", Lacki, K.M. and Bryntesson, L.M., ACS (2004) Anaheim, CA USA) described the use of such a 3C-PCC system for IgG adsorption to MabSelect™ affinity resin. This 3C-PCC method requires simpler hardware and easier operation than the typical four zone SMB system, directly reducing the cost associated with the capital equipment and the maintenance of the system.

In fact, simulated moving bed technology has been utilised for decades in various other fields. For example, US 3,291,726 (Universal Oil Products) described as early as 1966 a continuous simulated counter-current sorption process for the petrochemical industry. US 6,280,623 (Ma) describes a complex rotating fluidised simulated moving bed arrangement for sweetener refining, with holding tanks but not adapted for chromatographic separations.

An essential factor for a reliable continuous process is the quality of the columns used, and more specifically the similarity or even identity between columns. If the columns are not identical, the theoretical calculations will not be correct, and it will become difficult to design an efficient and robust continuous chromatography process. Also, for scale-up considerations, having identical columns in the system is essential. However, the packing of a column with a chromatography media is very complex in order to obtain repeatable results. Even small differences in the number of plates or other packing properties can have a huge effect on the end result.

US2007/0131615 (Moran et al.) discloses a multi-column chromatography system for biopharmaceutical production assembled from modular valves, disposable columns and peristaltic pumps. Although continuous chromatography methods like SMB and 3C-PCC have the potential to improve capacity utilization, they are complicated methods to set up and run, involving the control of a large number of valves and columns. Hence, there is a need for a simple and robust solution that increases capacity utilization compared to single column chromatography. In particular, there is a need for continuous and semi-continuous chromatography solutions that can be used in chromatography processes using disposable columns and flowpaths, which are today finding an increased use in pilot and small scale biopharmaceuticals production.

### Summary of the invention

One aspect of the invention is to provide an efficient process for large scale chromatographic separation of biopolymers. This is achieved with a chromatography system as defined in claim 1 and with a chromatography method as defined in claim 9. One advantage with such a system and method is that they allow for semi-continuous and continuous chromatography to be operated in disposable bioprocessing systems. Another advantage is that they compensate for the mismatch between column loading and column regeneration that commonly occurs when high titer feeds are used in bioprocessing. A further advantage is that a single multichannel peristaltic pump can be used to achieve continuous operation.

Further suitable embodiments of the invention are described in the depending claims.

### Brief description of the drawings

Fig. 1 shows a chromatography system with two columns according to the invention.
Fig. 2 shows a chromatography system with two columns and a control unit according to the invention.
Fig. 3 shows a chromatography system with three columns according to the invention.
Fig 4 shows a chromatography system with two columns and two hold tanks according to the invention.
Fig. 5 shows a chromatography system with three columns and three hold tanks according to the invention.
Fig. 6 shows a chromatography system with three columns and three hold tanks according to the invention.
Fig. 7 shows the principles for setting predetermined concentration levels.
Fig 8. shows a method for chromatographic separation according to the invention.
Fig. 9 shows a method for chromatographic separation according to the invention.
Fig. 10 shows a method for chromatographic separation according to the invention.

### Definitions

The term "feed" herein means a liquid provided to a chromatography system and comprising a target species to be purified. The target species can be a biopolymer, such as a protein, e.g. a monoclonal antibody. Examples of feeds can be clarified fermentation broths, biological fluids etc. as well as liquids originating from a previous separation step and comprising a partially purified target species.

The term "biopolymer" herein means a peptide, protein, nucleic acid or virus particle - native as well as biologically or synthetically modified - including fragments, multimers, aggregates, conjugates, fusion products etc.

The term "hold tank" herein means a vessel (e.g. a collapsible plastic bag, a rigid tank etc) connected to at least one inlet end of a column and to at least one outlet end of a column. It is connected to the inlet end of one column and the outlet end of another column and may be connected to both the inlet end and the outlet end of one column. It may also be connected to several column inlet and outlet ends. A hold tank can be connected to the column(s) via one or more valves, pumps, detectors and/or manifolds.

The term "pinch valve" herein means a device adapted to control or completely stop the flow through flexible tubing by constriction of the tubing. Pinch valves can e.g. be magnetically, electrically, pneumatically or hydraulically operated, but they can also be manually operated.

The term "clamp" herein means a manually operated pinch valve.

The term "pump" herein means either a separate pumping device or an individual channel in a multichannel pumping device, such as e.g. a multichannel peristaltic pump.

The term "packed bed chromatography column" herein means a column adapted to be packed with a particulate chromatography resin. A packed bed chromatography column can be axial or radial and may comprise a column tube, an inlet porous bed support and an outlet porous bed support, an inlet fluid distributor and an outlet fluid distributor. When packed with the chromatography resin, the resin bed can fill essentially the entire volume between the inlet and outlet porous bed supports.

### Detailed description of embodiments

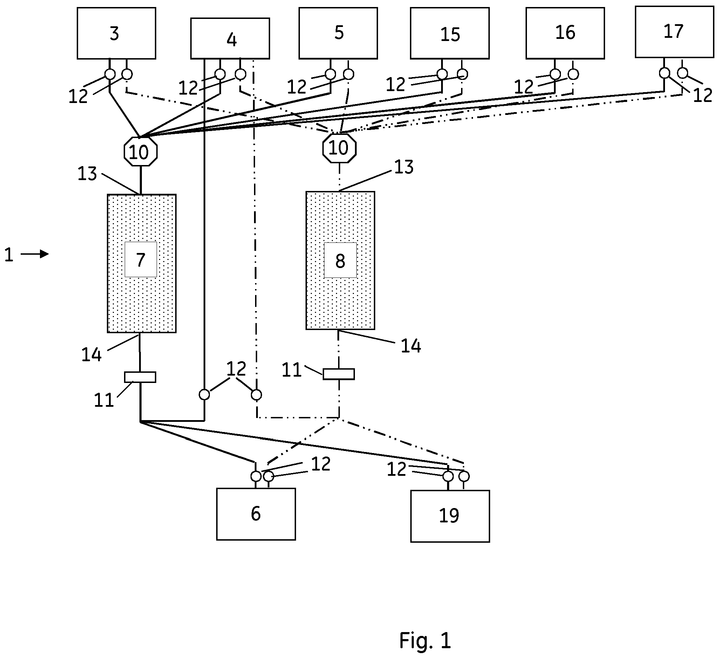

In one aspect illustrated by Figures 1-6, the present invention discloses a chromatography system (1) for separation of a biopolymer that comprises at least one feed tank **3,** at least one hold tank **4;4a,4b,4c, at** least one elution buffer tank **5,** at least one eluate tank **6,** at least two packed bed chromatography columns **7,8** and for each packed bed chromatography column at least one pump **10** and at least one outlet detector **11** both connected to said each packed bed chromatography column, wherein the feed tank, the hold tank(s), the elution buffer tank and the eluate tank are each connected to the packed bed chromatography columns via a system of valves **12.** As defined above, the hold tank(s) is/are connected to at least one inlet end **13** of a column **7,8** and at least one outlet end **14** of a column **7,8,** e.g. via the system of valves **12..** In other words, at least two packed bed chromatography columns, each with an inlet end **13** and an outlet end **14,** are provided and these columns are connected to at least one feed tank **3,** at least one hold tank **4;4a,4b,4c,** at least one elution buffer tank **5** and at least one eluate tank **6** via a system of valves. Each packed bed chromatography column is also connected to at least one pump and at least one outlet detector. The pumps can be connected to the inlet ends of the columns and the outlet detectors can be connected to the outlet ends of the columns. The outlet detectors can be of any type suitable for monitoring the concentration of a biopolymer, e.g. UV absorption detectors, refractive index detectors, light scattering detectors etc. The hold tank(s) is/are used to temporarily holds parts of a liquid stream flowing between two columns, and which volume can be smaller than the total volume of any specific liquid processed in the system. Examples of hold tanks can be a plastic bag with one inlet and one outlet in which both outlets are used simultaneously for charging and discharging liquid after the tank is filled with a predefined volume, or a tank in which composition is constantly changing.

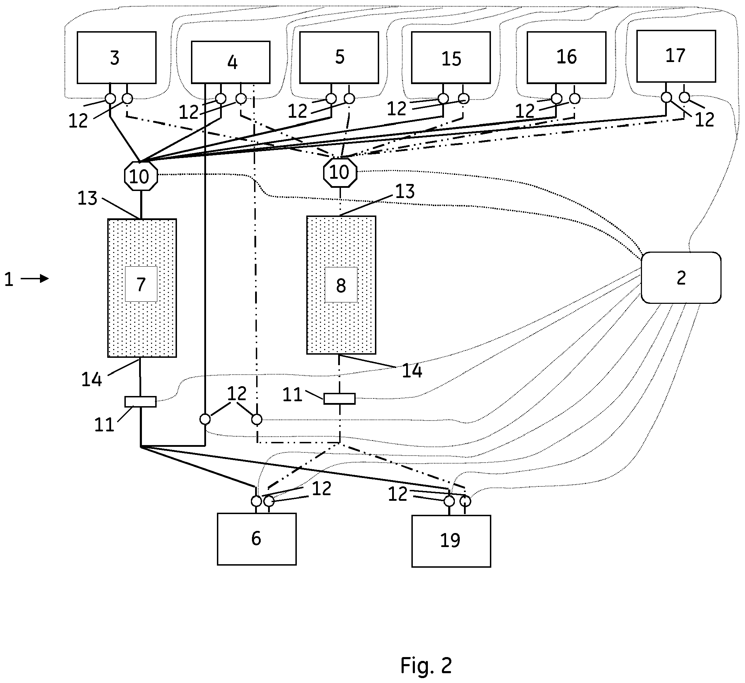

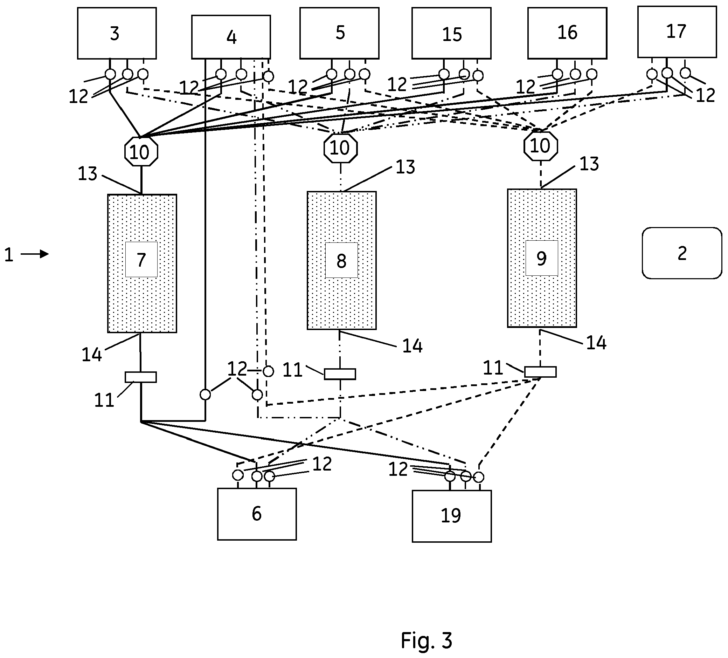

In certain embodiments, illustrated by Figures 2-6, the system also comprises at least one control unit **2,** which is electrically, pneumatically or hydraulically connected to the system of valves **12** and optionally to the detectors **11** and/or the pumps **10.** An advantage of this is that the operation of the system can be automated. The control unit can be e.g. a computer, a programmable logic controller or any other digital or analog unit capable of controlling a system of pumps and valves according to an algorithm and a set of input data. Although for simplicity no connections to the valves are shown in figures 3-6, it is understood that the control unit 2 can be connected to the valves, pumps and detectors in all these embodiments. The at least one hold tank **4;4a,4b,4c** is adapted to receive a fluid from an outlet end **14** of a column **7,8** and to convey fluid to the inlet end **13** of another column **8,7.** The hold tank can then function as a temporary storage vessel to handle any mismatch in flow rates between the different columns. The hold tank can be smaller, e.g. at least about 50% smaller, than the feed and elution buffer tanks as it is only used for temporary storage. In certain embodiments the at least one hold tank **4;4a,4b,4c** is equipped with at least one level indicator (not shown). This/these level indicator(s) can be connected to the control unit and used to avoid overfilling of the hold tank(s), in particular in semi-continuous or discontinuous processes where the flow to the hold tank(s) can be temporarily stopped while the hold tank(s) are emptied. The level indicator(s) can be optical, conductometric, ultrasonic or gravimetric (e.g. a balance).

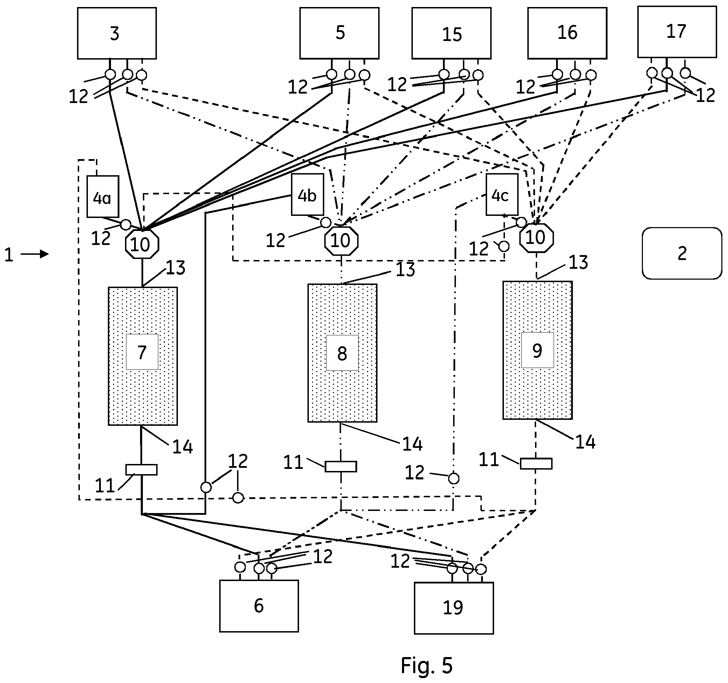

In certain embodiments, as illustrated by Figures 3 and 5, the chromatography system comprises at least three, such as at least four or five columns. The columns can be connected and adapted for semi-continuous or continuous chromatography in e.g. three-column periodic counter-current mode or simulated moving bed mode.

In some embodiments, the chromatography system also comprises at least one equilibration buffer tank **15,** at least one wash buffer tank **16** and/or at least one regeneration liquid tank **17.**

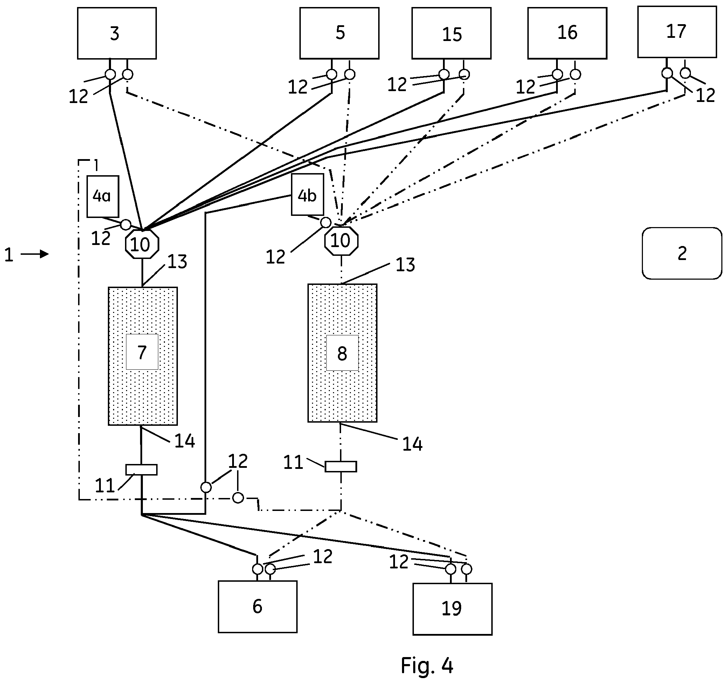

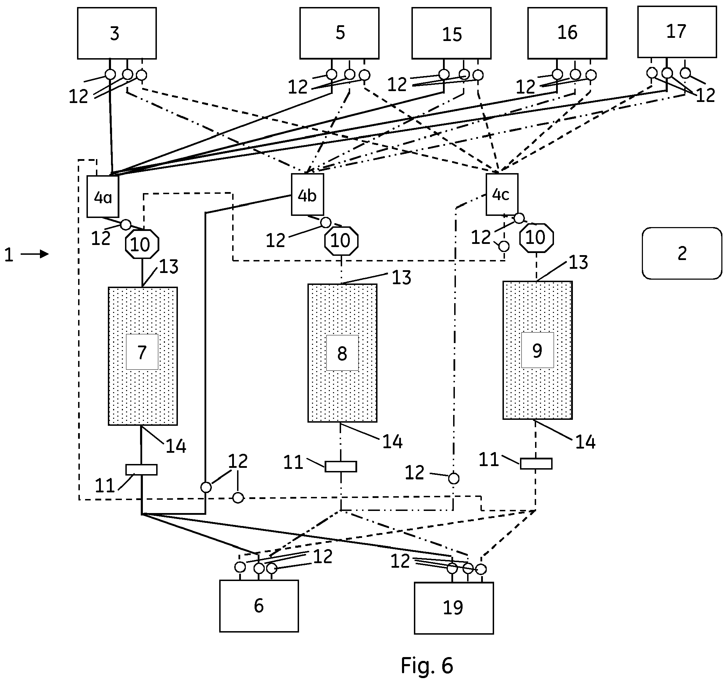

In certain embodiments illustrated by Figures 4,5 and 6, the chromatography system comprises at least one, such as one, hold tank **4a,4b;4c** per column **7,8;9.** This has the advantage that continuous chromatography processes can be run without any stops to empty the hold tank(s). The feed **3,** elution buffer **6,** equilibration buffer **15** and wash buffer **16** tanks can be connected to the chromatography columns either directly via the pumps as in Figures 4 and 5 or via the hold tanks **4a,4b,4c** and the pumps as in Figure 6. The tanks can have several connection ports each or multiple lines can be connected via manifolds. The tanks can also have vent ports (not shown), e.g. equipped with vent filters to avoid contamination.

In some embodiments the packed bed chromatography columns are packed with a resin having affinity towards the biopolymer. In specific embodiments the resin comprises a proteinaceous ligand. An advantage of using a proteinaceous ligand is that very high specificities towards the biopolymer can be achieved. Packed bed chromatographic separation is also a process able to give very high resolution between components due to the high numbers of theoretical plates that can be achieved.

In some embodiments the proteinaceous ligand is derived from Protein A, Protein G, Protein L or an antibody. It can be either a native or recombinant protein A, G, L or antibody or it can be a mutant, fragment or multimer of any of these proteins. Such ligands can have very high selectivity and are hence suited for capture of valuable biopharmaceuticals from complex feeds. They are however also expensive and the resin with the ligand should be used as efficiently as possible.

In certain embodiments the pump(s), detectors and/or valves comprise disposable flow paths, such as disposable flow paths mounted in reusable units or housings. The disposable flow paths can comprise disposable tubing, connected to disposable columns or disposable resin cartridges in column housings and to disposable flowpath components in pumps, valves, detectors and transducers. A disposable flow path in a pump can be the tubing in a peristaltic pump, but it can also be e.g. a disposable membrane setup for a membrane pump or a disposable syringe for a syringe pump. Disposable flowpaths in valves can include the tubing in pinch valves, but also e.g. the flowpath components of disposable ball valves, diaphragm valves, one-way valves etc. In a detector, the disposable flowpath can be a transparent flow-through cuvette for optical detection (UV, refractive index, light scattering etc) and in a transducer it can be tubing or specially designed flowpaths for measurement of pressure, flow-rate, conductivity, temperature etc. The flowpath assembly may also comprise sanitary and or sterile connectors, so that parts of the flowpath may be presterilized and connected to form the entire assembly without external contamination.

In some embodiments the pump(s) comprise(s) peristaltic pump(s), such as multichannel peristaltic pump(s). Peristaltic pumps are convenient to use in disposable bioprocessing systems as they do not add any fluid-contact surfaces and they are well adapted to parallel conveying of fluids in that one pump head can be used with several tubes. It is possible to use only one multichannel pump for the entire system, but it is also possible to use several multichannel pumps. If different flow rates are to be used in different lines, it is possible to use tubing of different diameters in the channels of a multichannel peristaltic pump. Further, it is possible to stop the flow in a separate line by releasing the compression of the tubing on the rollers of the pump.

In certain embodiments the valves **12** comprise pinch valves such as clamps or pinch valves operated by e.g. magnetic, electrical, pneumatic or hydraulic actuation. Pinch valves are commonly used in disposable bioprocessing because they can be mounted directly on the flexible tubing flowpaths with no additional fluid-contact surfaces. They are however not currently used in continuous or semi-continuous chromatography, as they are only adapted for closing/opening a flow path or regulating the flow rate in the path. Continuous and semi-continuous chromatography has hitherto relied on valves that are able to selectively direct flow into a plurality of branching flowpaths, i.e. multipath valves such as rotary valves and slide valves. With the hold tank(s) of the invention it is however possible to conduct continuous/semi-continuous chromatography using pinch valves.

In some embodiments the valves do not comprise rotary valves, slide valves or other components with moving parts in contact with the liquids. Rotary valves and slide valves are not easily adaptable to disposable bioprocessing in that they have complex precision engineering liquid contact parts.

In certain embodiments one or more of the tanks **3,4,4a,4b,4c,5,6,15,16,17,18,** such as all the tanks, comprise collapsible bags. Bags are highly useful tank constructions in disposable bioprocessing, as they are cheap, can easily be presterilized and take up small storage space when folded before and after use.

In some embodiments the chromatography system is used for separation of a biopolymer. The system is particularly useful for this purpose in that the presence of the hold tank(s) allows for easy operation in high-efficiency continuous or semi-continuous modes, where the different phases of the separation process are likely to require different flow rates and the hold tanks act as buffer reservoirs to accommodate liquids between the columns.

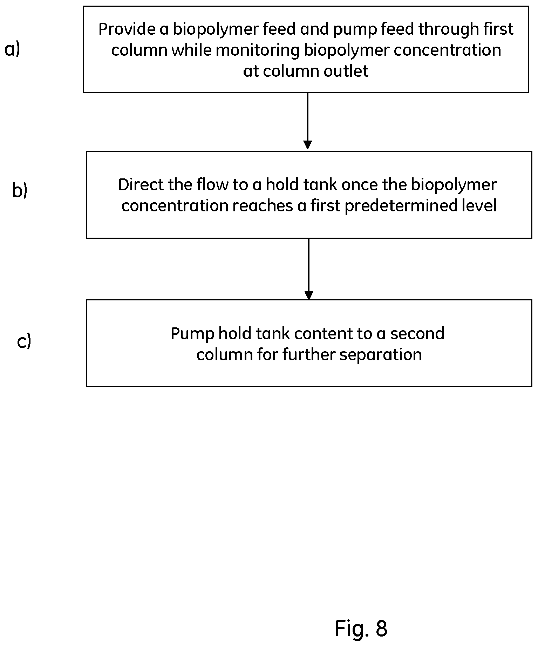

In one aspect, illustrated by Figures 1-6 and 8, the present invention discloses a method for chromatographic separation of a target biopolymer in a chromatography system **1** which comprises at least one hold tank **4; 4a,4b,4c,** connected to at least one inlet end **13** and at least one outlet end **14** of at least two columns **7,8** packed with a resin having affinity towards said target biopolymer and for each column at least one pump **10** and at least one outlet detector **11.** The method comprises the steps of:
a) providing a feed comprising the target biopolymer and pumping the feed through a first column **7** to either an eluate tank **6** or a waste receptacle **19** while monitoring the biopolymer concentration with a first outlet detector,
b) directing the flow from the outlet detector to a hold tank **4;4b** once the biopolymer concentration reaches a first predetermined level **L1** and
c) pumping the content of the hold tank to a second column **8** with a second outlet detector for further separation.

In some embodiments step c) can be conducted while maintaining the flow of the feed through the first column **7** until the biopolymer concentration reaches a second predetermined level **L2** as measured by the outlet detector connected to the first column. The feed can then be directed from the feed tank **3** via the hold tank **4;4b** to the second column **8.**

In certain embodiments the biopolymer is an impurity to be removed, such as a biopolymer selected from the group of host cell proteins, DNA, leached proteinaceous ligands, virus particles and antibody aggregates. The feed can then in step a) be pumped through the first column to the eluate tank **6.** The method of the invention is suitable for using in flow-through removal of contaminants in bioprocessing of e.g. monoclonal antibodies. In this case, the method can suitably be applied in a polishing step, i.e. after a capture step using e.g. affinity chromatography with protein A or another proteinaceous ligand. For removal of residual impurities such as host cell proteins, host cell DNA, protein A residues, viruses and/or aggregated antibodies, a multimodal resin, an anion exchange resin, a HIC resin or hydroxyapatite may be used in flow-through mode, where the antibody is collected in the flow-through and the contaminants are bound to the resin. In some embodiments the resin is selected from the group consisting of multimodal resins, ion exchange resins, HIC resins and apatite. In an advantageous embodiment, a multimodal anion exchange resin such as Capto™ adhere (GE Healthcare) is used.

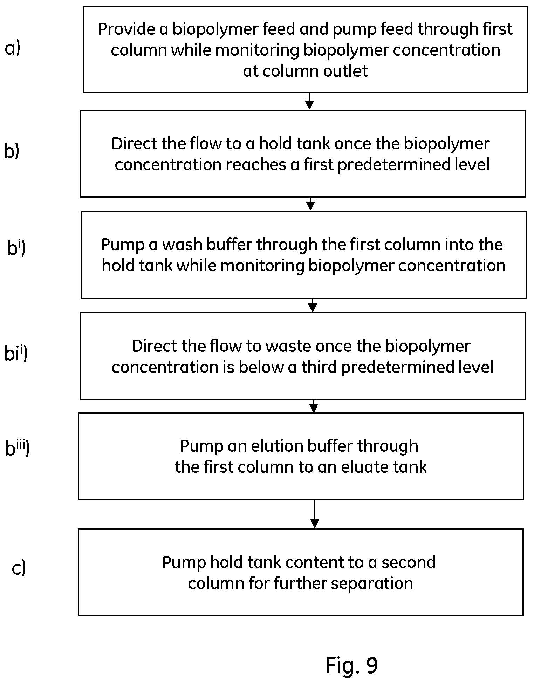

In certain embodiments further illustrated by Figure 9 the method also comprises the steps of
bⁱ) providing a wash buffer and pumping the wash buffer through the first column 7 and the first outlet detector into the hold tank **4;4b** while monitoring the biopolymer concentration with the first outlet detector,
bⁱⁱ) directing the flow from the first outlet detector to a waste receptacle once the biopolymer concentration is below a third predetermined level **L3,**
bⁱⁱⁱ) providing an elution buffer and pumping the elution buffer through the first column to an eluate tank **6.**
In these embodiments, the feed can in step a) be pumped through the first column to the waste receptacle **19.**

The method can also comprise a step of pumping a column regeneration solution through the first column **7** into a waste receptacle **19.** It can also before step bⁱ comprise a step of terminating the flow of feed to the first column 7 once the biopolymer concentration reaches a second predetermined level.

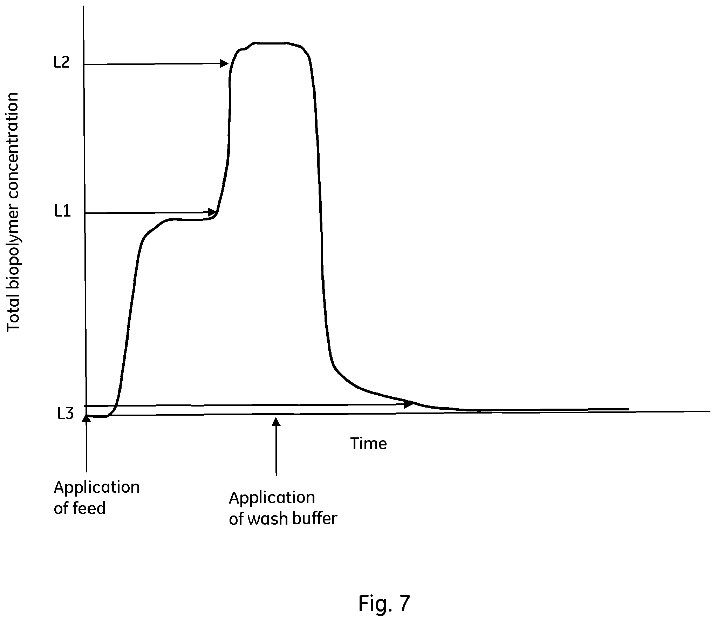

The predetermined biopolymer concentration levels **L1,L2,L3** can be determined as illustrated in Figure 7, which shows a typical response curve vs. time for a total biopolymer concentration detector, e.g. a UV absorbance detector. When the feed is loaded on a column, non-adsorbing biopolymers will be detected first and reach some form of plateau level (the first plateau in the curve). Then as the binding sites for the adsorbing biopolymer get saturated, the adsorbing biopolymer will be detected. The first predetermined biopolymer concentration level **L1** can be set to the point which corresponds to e.g. 1%, 5% or 10% of the adsorbing biopolymer concentration in the feed. At this level the biopolymer concentration is too high to allow the outlet stream to go to waste and the outlet stream is instead diverted to a hold tank for further processing. As more feed is loaded on the column, a second plateau level will be reached, where all the binding sites are saturated and the concentration of the adsorbing biopolymer in the outlet will equal the concentration in the feed. The second predetermined biopolymer concentration level **L2** can be set to the point which corresponds to e.g. 70%, 80% or 90% of the adsorbing biopolymer concentration in the feed. At this level almost all the binding sites are saturated and it is more efficient to divert the feed flow to the second column via a hold tank. After **L2** has been reached, wash buffer can be supplied to the first column and as the non-adsorbing biopolymers are washed out, the total biopolymer concentration at the outlet will decrease to near zero. The third predetermined biopolymer concentration level **L3** can be set to the point which corresponds to e.g. 0.01%, 0.1% or 0.5% of the biopolymer concentration in the feed. At this level essentially no non-adsorbing biopolymers remain and the elution of the first column can start. The skilled person will realize that the levels **L1,L2** and **L3** also can be determined in analogue ways using other types of outlet detectors, e.g. a detector that specifically detects the adsorbing biopolymer. Further, it is also possible to direct the flows based on predetermined times or collected liquid volumes, which according to earlier experience are expected to correspond to the points when the biopolymer concentration is approximately at **L1,L2** and **L3.**

In some embodiments the biopolymer is a biopharmaceutical, such as a plasmid, a vaccine or a protein selected from the group of immunoglobulins, monoclonal antibodies, antibody fragments, insulin, coagulation factors and erythropoietin. These biopolymers can be separated by the method of the invention in bind-elute mode, where the biopolymer binds to the resin during loading and is desorbed by the elution buffer and recovered in the eluate tank.

In certain embodiments the resin is an affinity resin, such as a resin comprising a proteinaceous ligand. These resins can suitably be used in bind-elute mode with the method of the invention.

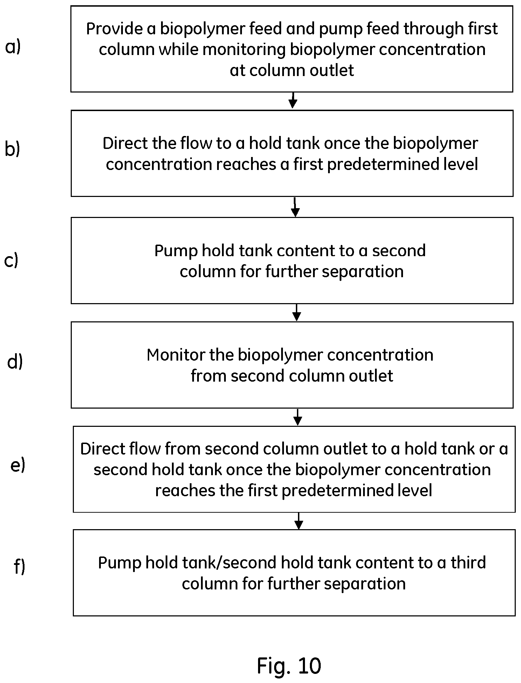

In some embodiments further illustrated by Figure 10 the method also comprises the steps of
d) monitoring the concentration of the biopolymer from the second column **8** with the second outlet detector,
e) directing the flow from the second outlet detector to the hold tank **4;4b** or to a second hold tank **4c** once the biopolymer concentration reaches the first predetermined level **L1** and
f) pumping the content of the second hold tank **4c** to either a third column **9** with a third outlet detector or to the first column 7 for further separation.

In certain embodiments the method also comprises the steps of
eⁱ) pumping the wash buffer through the second column **8** and the second outlet detector into the hold tank **4;4b** or the second hold tank **4c** while monitoring the biopolymer concentration with the second outlet detector,
eⁱⁱ) directing the flow from the second outlet detector to a waste receptacle **19** once the biopolymer concentration is below the third predetermined level **L3,**
eⁱⁱⁱ) pumping the elution buffer through the second column **8** to an eluate tank.

In some embodiments the method comprises before step eⁱ a step of terminating the flow of feed into the second column **8** when the biopolymer concentration reaches the second predetermined level **L2.**

In some embodiments the pump(s) **10** comprise(s) peristaltic pump(s) such as multichannel peristaltic pump(s).

In certain embodiments the flows are controlled by a system of pumps **10** and pinch valves electrically, pneumatically or hydraulically connected to a control unit **2.**

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. It is to be noted that features of different embodiments can be combined to form further embodiments.

## Claims

1. A chromatography system (1) for separation of a biopolymer, comprising: at least one feed tank (3), at least one hold tank (4;4a,4b,4c), at least one elution buffer tank (5), at least one eluate tank(6), at least two packed bed chromatography columns (7,8,9) and for each column (7,8,9) at least one respective pump (10) and at least one respective outlet detector (11) both connected to said column, wherein said feed tank, hold tank(s), elution buffer tank and eluate tank are each connected to said at least two columns via a system of valves (12) and wherein said hold tank(s) is/are connected to a respective outlet end (14) of one of said columns and to a respective inlet end (13) of another one of said columns, wherein said at least one hold tank (4;4a,4b,4c) is arranged to receive a fluid from said outlet end (14) of said one column and to convey the fluid to said inlet end (13) of said other column by means of a pump (10) connected to said other column.

2. The chromatography system according to claim 1, further comprising at least one control unit (2), electrically, pneumatically or hydraulically connected to said system of valves (12).

3. The chromatography system according to claim 1 or 2, further comprising at least one equilibration buffer tank (15), at least one wash buffer tank (16) and/or at least one regeneration liquid tank (17).

4. The chromatography system according to any one of claims 1 - 3, wherein said packed bed chromatography columns (7,8,9) are packed with a resin having affinity towards said biopolymer.

5. The chromatography system according to any preceding claim, wherein said at least one pump, detector and/or said valves comprise disposable flow paths, such as disposable flow paths mounted in reusable units or housings.

6. The chromatography system according to any preceding claim, wherein said at least one pump comprises at least one peristaltic pump, such as at least one multichannel peristaltic pump.

7. The chromatography system according to any preceding claim, wherein the valves comprise pinch valves.

8. Use of a chromatography system as defined in any preceding claim for separation of a biopolymer.

9. A method for chromatographic separation of a biopolymer in a chromatography system (1) comprising at least one hold tank (4;4a,4b,4c) connected to a respective outlet end (14) of a first column (7) and to a respective inlet end (13) of a second column (8), said columns (7,8) being packed with a resin having affinity towards said biopolymer, and for each column at least one respective pump (10) and at least one respective outlet detector (11) both connected to said column, said method comprising the steps of:
a) providing a feed comprising said biopolymer and pumping said feed through the first column (7) while monitoring the biopolymer concentration with a first outlet detector connected thereto,
b) directing the flow from said first outlet detector to the hold tank (4;4b) once the biopolymer concentration reaches a first predetermined level (L1) and
c) pumping the content of the hold tank (4;4b) to the second column (8) with second outlet detector connected thereto for further separation.

10. The method according to claim 9, wherein during step c), the flow of the feed through the first column (7) is maintained until the biopolymer concentration reaches a second predetermined level (L2) as measured by the outlet detector connected to the first column.

11. The method according to claim 9 or 10, further comprising the steps of
bⁱ) providing a wash buffer and pumping said wash buffer through said first column (7) and said first outlet detector into said hold tank (4;4b) while monitoring the biopolymer concentration with said first outlet detector,
bⁱⁱ) directing the flow from said first outlet detector to a waste receptacle (19) once the biopolymer concentration is below a third predetermined level (L3),
bⁱⁱⁱ) providing an elution buffer and pumping said elution buffer through said first column to an eluate tank (6).

12. The method according to any one of claims 9-11, further comprising the steps of
d) monitoring the concentration of said biopolymer from the second column (8) with said second outlet detector,
e) directing the flow from the second outlet detector to the hold tank (4;4b) or to a second hold tank (4c) once the biopolymer concentration reaches the first predetermined level (L1) and
f) pumping the content of the hold tank (4;4b) or the second hold tank (4c) to either a third column (9) with a third outlet detector or to the first column (7) for further separation.

13. The method according to claim 12, further comprising the steps of
eⁱ) pumping said wash buffer through said second column (8) and said second outlet detector into said hold tank (4;4b) or said second hold tank (4c) while monitoring the concentration of said biopolymer with said second outlet detector,
eⁱⁱ) directing the flow from said second outlet detector to a waste receptacle (19) once the concentration of said biopolymer is below the third predetermined level (L3), and
eⁱⁱⁱ) pumping said elution buffer through said second column (8) to an eluate tank.

14. The method according to any one of claims 9-13, wherein said pumps (10) comprise peristaltic pumps.

15. The method according to any one of claims 9-14, wherein the flows are controlled by a system of pumps (10) and pinch valves electrically connected to a control unit (2).

## Patentansprüche

1. Chromatographie-System (1) zum Trennen eines Biopolymers, umfassend:
mindestens einen Vorlaufbehälter (3), mindestens einen Auffangbehälter (4; 4a, 4b, 4c) mindestens einen Elutionspufferbehälter (5), mindestens einen Eluatbehälter (6), mindestens zwei Füllkörper-Chromatographiesäulen (7, 8, 9), und für jede Säule (7, 8, 9) mindestens
jeweils eine Pumpe (10) und mindestens jeweils einen
Ausgangsdetektor (11), die beide mit der Säule verbunden sind,
wobei der Vorlaufbehälter, der (die) Auffangbehälter, der Elutionspufferbehälter und der Eluatbehälter jeweils mit den mindestens zwei Säulen über ein Ventilsystem (12) verbunden sind, und wobei der (die) Auffangbehälter jeweils mit einem Ausgangsende (14) einer der Säulen verbunden ist (sind) und mit jeweils einem Eingangsende (13) einer anderen der Säulen,
wobei der mindestens eine Auffangbehälter (4; 4a, 4b, 4c) angeordnet ist, um ein Fluid von dem Ausgangsende (14) der einen Säule aufzunehmen und dieses Fluid zu dem Eingangsende (13) der anderen Säule zu befördern,
mittels einer Pumpe (10), die mit der anderen Säule verbunden ist.

2. Chromatographie-System nach Anspruch 1, weiter umfassend mindestens eine Steuereinheit (2), die elektrisch, pneumatisch oder hydraulisch mit dem Ventilsystem (12) verbunden ist.

3. Chromatographie-System nach Anspruch 1 oder 2, weiter umfassend mindestens einen Äquilibrierungspufferbehälter (15), mindestens einen Waschpufferbehälter (16) und/oder mindestens einen Regenerationsflüssigkeitsbehälter (17).

4. Chromatographie-System nach einem der Ansprüche 1-3, wobei die Füllkörper-Chromatographiesäulen (7, 8, 9) mit einem Harz gefüllt sind, das eine Affinität für das Biopolymer aufweist.

5. Chromatographie-System nach einem der vorstehenden Ansprüche, wobei die mindestens eine Pumpe, der Detektor und/oder die Ventile Einweg-Durchläufe aufweisen, wie Einweg-Durchläufe, die in wiederverwendbaren Einheiten oder Gehäusen montiert sind.

6. Chromatographie-System nach einem der vorstehenden Ansprüche, wobei die mindestens eine Pumpe mindestens eine Peristaltikpumpe aufweist, wie eine Mehrkanal-Peristaltikpumpe.

7. Chromatographie-System nach einem der vorstehenden Ansprüche, wobei die Ventile Quetschventile umfassen.

8. Verwendung eines Chromatographie-Systems wie in einem der vorstehenden Ansprüche definiert, zum Trennen eines Biopolymers.

9. Verfahren zum chromatographischen Trennen eines Biopolymers in einem Chromatographie-System (1), umfassend mindestens einen Auffangbehälter (4; 4a, 4b, 4c), der jeweils mit einem Ausgangsende (14) einer ersten Säule (7) verbunden ist
und jeweils mit einem Eingangsende (13) einer zweiten Säule (8), wobei die Säulen (7, 8) mit einem Harz gefüllt sind,
das eine Affinität für das Biopolymer aufweist, und für jede Säule mindestens jeweils eine Pumpe (10) und mindestens
jeweils einen Ausgangsdetektor (11), die beide mit der Säule verbunden sind, wobei das Verfahren die folgenden Schritte umfasst:
a) Bereitstellen eines Zulaufs, der das Biopolymer umfasst, und Pumpen des Zulaufs durch die erste Säule (7)
während die Biopolymer-Konzentration mit einem ersten Ausgangsdetektor überwacht wird, der damit verbunden ist,
b) Leiten des Stroms von dem ersten Ausgangsdetektor zu dem Auffangbehälter (4; 4b), wenn die Biopolymer-Konzentration ein erstes vorbestimmtes Level (L1) erreicht, und
c) Pumpen des Inhalts des Auffangbehälters (4; 4b) zu der zweiten Säule (8) mit einem zweiten Ausgangsdetektor, der damit verbunden ist, zur weiteren Trennung.

10. Verfahren nach Anspruch 9, wobei während Schritt c) der Strom des Zulaufs durch die erste Säule (7) beibehalten wird, bis die Biopolymer-Konzentration ein zweites vorbestimmtes Level (L2) erreicht, wie es durch den Ausgangsdetektor gemessen wird, der mit der ersten Säule verbunden ist.

11. Verfahren nach Anspruch 9 oder 10, weiter umfassend die folgenden Schritte:
bⁱ) Bereitstellen eines Waschpuffers und Pumpen des Waschpuffers durch die erste Säule (7) und den ersten Ausgangsdetektor in den Auffangbehälter (4; 4b), während die Biopolymer-Konzentration mit dem ersten Ausgangsdetektor überwacht wird,
bⁱⁱ) Leiten des Flusses von dem ersten Ausgangsdetektor zu einem Abfallbehälter (19), wenn die Biopolymer-Konzentration unter einem dritten vorbestimmten Level (L3) liegt,
bⁱⁱⁱ) Bereitstellen eines Elutionspuffers und Pumpen des Elutionspuffers durch die erste Säule zu einem Eluatbehälter (6).

12. Verfahren nach einem der Ansprüche 9-11, weiter die folgenden Schritte umfassend:
d) Überwachen der Konzentration des Biopolymers in der zweiten Säule (8) mit dem zweiten Ausgangsdetektor
e) Leiten des Stroms von dem zweiten Ausgangsdetektor zu dem Auffangbehälter (4; 4b) oder zu einem zweiten Auffangbehälter (4c), wenn die Biopolymerkonzentration das erste vorbestimmte Level (L1) erreicht und
f) Pumpen des Inhalts des Auffangbehälters (4; 4b) oder des zweiten Auffangbehälters (4c) entweder zu einer dritten Säule mit einem dritten Auffangbehälter (9) oder zu der ersten Säule (7) zum weiteren Trennen.

13. Verfahren nach Anspruch 12, weiter die folgenden Schritte umfassend:
eⁱ) Pumpen des Waschpuffers durch die zweite Säule (8) und den zweiten Ausgangsdetektor in den Auffangbehälter (4; 4b) oder den zweiten Auffangbehälter (4c), während die Konzentration des Biopolymers mit dem zweiten Ausgangsdetektor überwacht wird,
eⁱⁱ) Leiten des Stroms von dem zweiten Ausgangsdetektor zu einem Abfallbehälter (19), wenn die Biopolymer-Konzentration unter einem dritten vorbestimmten Level (L3) liegt,
eⁱⁱⁱ) Pumpen des Elutionspuffers durch die zweite Säule (8) zu einem Eluatbehälter.

14. Verfahren nach einem der Ansprüche 9-13, wobei die Pumpen (10) Peristaltikpumpen umfassen.

15. Verfahren nach einem der Ansprüche 9-14, wobei die Ströme durch ein Pumpensystem (10) und Quetschventile gesteuert werden, das bzw. die elektrisch mit einer Steuereinheit (2) verbunden ist bzw. sind.

## Revendications

1. Système chromatographique (1) pour la séparation d'un biopolymère, comprenant au moins un réservoir d'alimentation (3), au moins un réservoir de retenue (4 ; 4a, 4b, 4c), au moins un réservoir de tampon d'élution (5), au moins un réservoir d'éluat (6), au moins deux colonnes chromatographiques à lits garnis (7, 8, 9) et, pour chaque colonne (7, 8, 9), au moins une pompe respective (10) et au moins un détecteur de sortie respectif (11) tous deux raccordés à ladite colonne,
dans lequel ledit réservoir d'alimentation, le ou les réservoirs de retenue, le réservoir de tampon d'élution et le réservoir d'éluat sont chacun raccordés auxdites au moins deux colonnes via un système de vannes (12) et dans lequel le ou lesdits réservoirs de retenue est ou sont raccordés à une extrémité de sortie respective (14) de l'une desdites colonnes et à une extrémité d'entrée respective (13) d'une autre desdites colonnes,
dans lequel ledit au moins un réservoir de retenue (4 ; 4a, 4b, 4c) est agencé pour recevoir un fluide de ladite extrémité de sortie (14) de ladite une colonne et acheminer le fluide à ladite extrémité d'entrée (13) de ladite autre colonne au moyen d'une pompe (10) raccordée à ladite autre colonne.

2. Système chromatographique selon la revendication 1, comprenant en outre au moins une unité de commande (2) raccordée audit système de vannes (12) par voie électrique, pneumatique ou hydraulique.

3. Système chromatographique selon la revendication 1 ou 2, comprenant en outre au moins un réservoir de tampon d'équilibrage (15), au moins un réservoir de tampon de lavage (16) et/ou au moins un réservoir de liquide de régénération (17).

4. Système chromatographique selon l'une quelconque des revendications 1 à 3, dans lequel lesdites colonnes chromatographiques à lits garnis (7, 8, 9) sont garnies d'une résine ayant une affinité envers ledit biopolymère.

5. Système chromatographique selon l'une quelconque des revendications précédentes, dans lequel ladite au moins une pompe, ledit détecteur et/ou lesdites vannes comprennent des trajets d'écoulement jetables tels que des trajets d'écoulement jetables montés dans des unités ou des boîtiers réutilisables.

6. Système chromatographique selon l'une quelconque des revendications précédentes, dans lequel ladite au moins une pompe comprend au moins une pompe péristaltique telle qu'au moins une pompe péristaltique à canaux multiples.

7. Système chromatographique selon l'une quelconque des revendications précédentes, dans lequel les vannes comprennent des vannes à pincement.

8. Utilisation d'un système chromatographique selon l'une quelconque des revendications précédentes pour la séparation d'un biopolymère.

9. Procédé de séparation chromatographique d'un biopolymère dans un système chromatographique (1) comprenant au moins un réservoir de retenue (4; 4a, 4b, 4c) raccordé à une extrémité de sortie respective (14) d'une première colonne (7) et à une extrémité d'entrée respective (13) d'une deuxième colonne (8), lesdites colonnes (7, 8) étant garnies d'une résine ayant une affinité envers ledit biopolymère et, pour chaque colonne, au moins une pompe respective (10) et au moins un détecteur de sortie respectif (11) tous deux raccordés à ladite colonne, ledit procédé comprenant les étapes consistant à :
a) fournir une alimentation comprenant ledit biopolymère et le pompage de ladite alimentation à travers la première colonne (7) tout en contrôlant la concentration de biopolymère avec un premier détecteur de sortie qui lui est raccordé,
b) diriger l'écoulement dudit premier détecteur de sortie au réservoir de retenue (4 ; 4b) une fois que la concentration du biopolymère atteint un premier niveau prédéterminé (L1) et
c) pomper le contenu du réservoir de retenue (4; 4b) à la deuxième colonne (8) avec un second détecteur de sortie qui lui est raccordé pour une autre séparation.

10. Procédé selon la revendication 9, dans lequel, au cours de l'étape c), l'écoulement de l'alimentation à travers la première colonne (7) est maintenu jusqu'à ce que la concentration de biopolymère atteigne un deuxième niveau prédéterminé (L2) tel que mesuré par le détecteur de sortie raccordé à la première colonne.

11. Procédé selon la revendication 9 ou 10, comprenant en outre les étapes consistant à :
bⁱ) fournir un tampon de lavage et pomper ledit tampon de lavage à travers ladite première colonne (7) et ledit premier détecteur de sortie dans ledit réservoir de retenue (4; 4b) tout en contrôlant la concentration de biopolymère avec ledit premier détecteur,
bⁱⁱ) diriger l'écoulement dudit premier détecteur à un réceptacle de déchets (19) une fois que la concentration de biopolymère se situe en dessous d'un troisième niveau prédéterminé (L3),
bⁱⁱⁱ) fournir un tampon d'élution et pomper ledit tampon d'élution à travers ladite première colonne jusqu'à un réservoir d'éluat (6).

12. Procédé selon l'une quelconque des revendications 9 à 11, comprenant en outre les étapes consistant à :
d) contrôler la concentration dudit biopolymère dans la deuxième colonne (8) par ledit second détecteur de sortie,
e) diriger l'écoulement du second détecteur de sortie au réservoir de retenue (4 ; 4b) ou à un second réservoir de retenue (4c) une fois que la concentration de biopolymère atteint le premier niveau prédéterminé (L1) et
f) pomper le contenu dudit réservoir de retenue (4; 4b) ou dudit deuxième réservoir de retenue (4c) à une troisième colonne (9) avec un troisième détecteur de sortie ou à la première colonne (7) pour une autre séparation.

13. Procédé selon la revendication 12, comprenant en outre les étapes consistant à :
eⁱ) pomper ledit tampon de lavage à travers ladite seconde colonne (8) et ledit second détecteur de sortie dans ledit réservoir de retenue (4 ; 4b) ou dans ledit second réservoir de retenue (4c) tout en contrôlant la concentration dudit biopolymère avec ledit second détecteur de sortie,
eⁱⁱ) diriger l'écoulement dudit second détecteur de sortie à un réceptacle de déchets (19) une fois que la concentration dudit biopolymère se situe en dessous du troisième niveau prédéterminé (L3) et
eⁱⁱⁱ) pomper ledit tampon de solution à travers ladite deuxième colonne (8) vers un réservoir d'éluat.

14. Procédé selon l'une quelconque des revendications 9 à 13, dans lequel lesdites pompes (10) comprennent des pompes péristaltiques.

15. Procédé selon l'une quelconque des revendications 9 à 14, dans lequel les écoulements sont commandés par un système de pompes (10) et de vannes à pincement connectées électriquement à une unité de commande (2).
